(19) Europäisches Patentamt
European Patent Office
Office européen des brevets

(11) **EP 2 259 219 A2**

(12) # EUROPEAN PATENT APPLICATION

(43) Date of publication:
**08.12.2010 Bulletin 2010/49**

(51) Int Cl.:
***G06T 7/00*** (2006.01)

(21) Application number: **10177215.0**

(22) Date of filing: **15.02.2005**

(84) Designated Contracting States:
**AT BE BG CH CY CZ DE DK EE ES FI FR GB GR HU IE IS IT LI LT LU MC NL PL PT RO SE SI SK TR**

(30) Priority: **16.02.2004 IT MO20040036**

(62) Document number(s) of the earlier application(s) in accordance with Art. 76 EPC:
**05708534.2 / 1 716 539**

(71) Applicant: **Fondmatic - Societa' per Azioni**
**40014 Crevalcore (IT)**

(72) Inventors:
• **Galassi, Luciano**
**41050, Montale (MO) (IT)**

• **Vergnani, Alessandro**
**44012, Bondeno(FE) (IT)**

(74) Representative: **Villanova, Massimo**
**Luppi Crugnola & Partners S.r.L.**
**Viale Corassori, 54**
**41124 Modena (IT)**

Remarks:
This application was filed on 16-09-2010 as a divisional application to the application mentioned under INID code 62.

(54) **Method for checking images**

(57) A method comprises acquiring an image, comparing said image with reference means and modifying said reference means on the basis of said image, if said comparing has shown that said image conforms to said reference means.

Fig. 1

Printed by Jouve, 75001 PARIS (FR)

**Description**

The invention relates to a method for checking images, in particular for checking images of products in order to identify faults in the products.

The method is particularly suitable for detecting faults in products obtained by casting.

In order to detect faults in products obtained by casting, that have internal cavities that are difficult to reach, the use of endoscopic probes is known that are inserted inside the aforementioned cavities.

The image obtained by the endoscopic probes is compared with a reference image extrapolated from a sample piece the finish of which has been judged to be satisfactory following a visual assessment by an operator.

With the endoscopic probes electronic computer devices can be associated that generate characteristic parameters of the image obtained with the endoscopic probes.

The subsequent comparison between the images obtained with the endoscopic probes and the reference image occurs on the basis of the aforementioned parameters.

For each parameter an acceptability threshold is set.

If the difference between the value of one, or more of the aforementioned parameters, calculated for a certain image, and the value of the corresponding parameters concerning the reference image exceeds a preset amount, the product to which the image refers is deemed to be unacceptable.

The examination of the images is particularly complicated inasmuch as the products obtained by casting have defects that are not easily identifiable.

In particular, these faults may consist of protuberances - such as lumps, or crests, caused by fissures in the dies and/or cores - or by depressions - such as holes or flaking, caused by grains of sand imbedded in the surface of the products and subsequently removed by the latter.

These faults are also rather difficult to detect inasmuch as an unacceptable product does not have macroscopic difference compared with an acceptable product - for example a different shape or a different geometry of the parts that make it up - but is affected by imperfections that substantially affect the surface finish.

A drawback of the methods disclosed above consists of the fact they are not easily to manageable.

On the one hand, the aforementioned thresholds can be set in such a rough way that the comparison between the image of a product to be examined and the reference image leads a product to be deemed to be acceptable that in fact has defects.

On the other hand, fine adjustment of a very high number of thresholds, which is necessary for correct analysis of complex images, requires such a long time as to make the method effectively unusable.

In all cases, as the aforementioned thresholds are chosen arbitrarily by an operator, discrimination between acceptable and unacceptable images ultimately depends on the operator's skill and sensitivity.

An object of the invention is to improve the methods for checking images.

Another object is to obtain a method for checking images that is extremely sensitive although it is easy to apply.

In a first aspect of the invention, there is provided a method, comprising acquiring an image, comparing said image with reference means, **characterised in that** it furthermore comprises processing a plurality of reference images to obtain said reference means.

In a version, said processing comprises statistically processing the aforementioned plurality of images.

Owing to the invention, it is possible to obtain a method that is particularly flexible inasmuch as it is able to tolerate variations that arise in the images to be examined and which are due to acceptable differences of roughness and geometry of the piece compared with the reference means.

Furthermore, owing to the use of statistical processing techniques, the method according to the invention is able to consider possible variations in the same zones of different images.

In a second aspect of the invention, there is provided a method, comprising acquiring an image, comparing said image with reference means, **characterised in that** it furthermore comprises modifying said reference means on the basis of said image, if said comparing has shown that said image conforms to said reference means.

Owing to this aspect of the invention, it is possible to obtain a method for checking images that is almost independent of a visual assessment conducted by an operator.

In accordance with the method according to the invention, the reference means is initially obtained by processing a plurality of images deemed to be acceptable following a visual inspection performed by an operator.

Nevertheless, when the method is implemented, the images that are examined and deemed to be acceptable are processed in such a way as to contribute to the definition of the reference means.

The reference means is therefore not unchangeable, but varies as the method according to the invention is implemented.

In other words, during implementation of the method, the originally defined reference means are progressively replaced by further reference means that take account of the images deemed to be acceptable that have been identified up until that moment.

The invention may be better understood and implemented with reference to the attached drawings, which show an embodiment thereof by way of non-limitative example, in which:

Figure 1 is a perspective view of an apparatus for surface checking of cavities in objects obtained by casting;
Figure 2 is a schematic view of an image of an object to be examined, this image being subdivided into sampling areas of the image;
Figure 3 is a view like the one in Figure 2, showing the image subdivided into comparison areas;

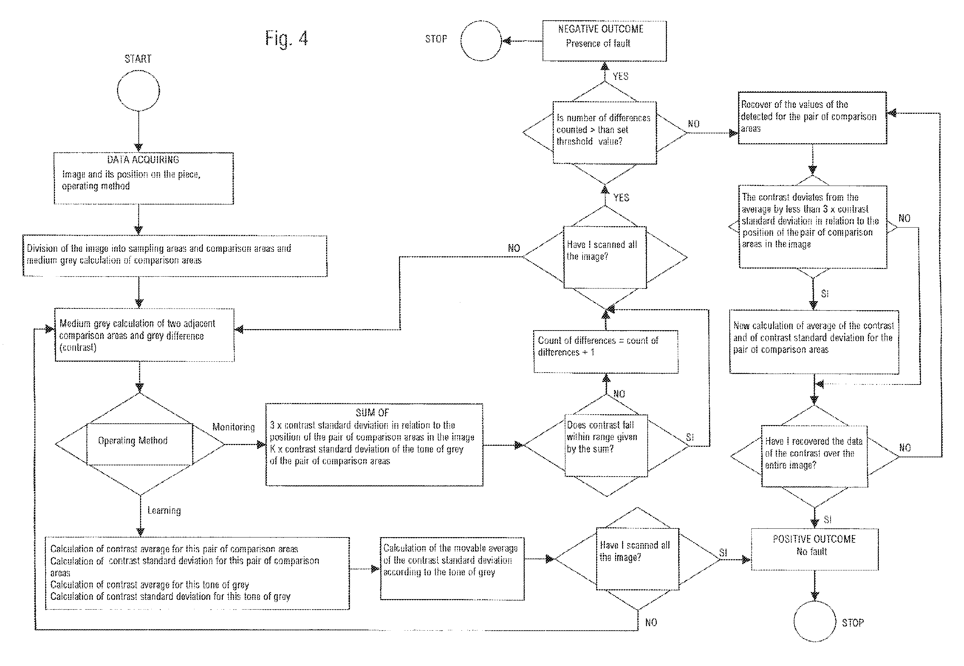

Figure 4 is a flow diagram indicating the phases of a method for checking images;
Figure 5 is a graph showing the trend of the moving average of the standard deviation of the contrast, in a direction X, depending on the tones of grey detected in the reference images;
Figure 6 is a graph like the one in Figure 5, showing the trend of the moving average of the standard deviation of the contrast, in a direction Y, substantially orthogonal to the direction X, depending on the tones of grey detected in the reference images.

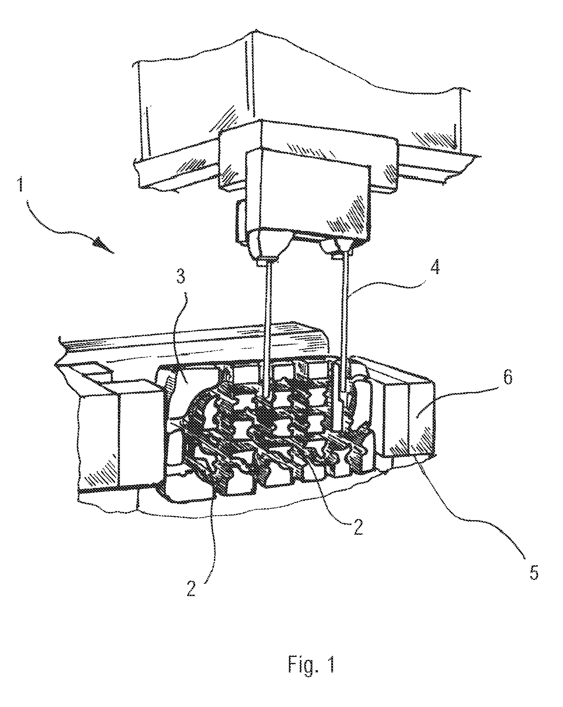

With reference to Figure 1 there is shown an apparatus 1 to check the cavities 2 provided inside the objects obtained by casting, for example hydraulic manifolds 3.

It should be noted that in Figure 1 the hydraulic manifold 3 has been sectioned to facilitate comprehension.

The apparatus 1 comprises a pair of endoscopic probes 4 shaped in such a way as to be able to be received inside the cavities 2.

The apparatus furthermore comprises a robot 5 provided with a gripper 6 arranged to grasp the hydraulic manifolds 3 and make them interact with the endoscopic probes 4.

The endoscopic probes 4 are rotatable around the respective longitudinal axes in such a way as to enable a complete examination of the cavities 2.

By means of the endoscopic probes 4 it is possible to acquire images that will be assessed, as will be illustrated in greater detail below.

The endoscopic probes 4 detect, for each hydraulic manifold, in different zones of the latter, a total number of images amounting to approximately a hundred.

The apparatus 1 furthermore comprises a control unit arranged to compare the images with a reference in order to identify possible defects in the hydraulic manifolds 3.

The reference is obtained by statistically processing a plurality of images of hydraulic manifolds 3 that were deemed to be acceptable following a visual examination conducted by an operator.

The examined images are in black and white and are such that in each one of them 256 tones of grey can be detected.

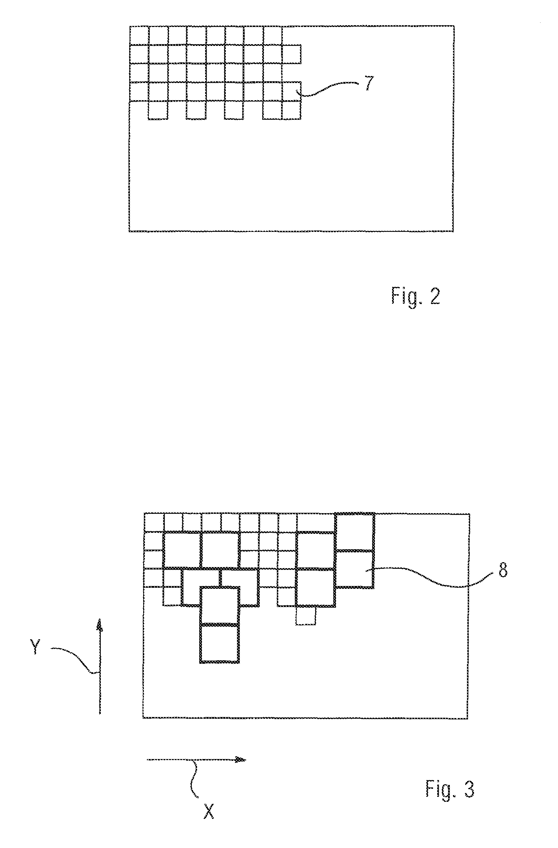

With reference to Figures 2 and 3, each image is subdivided into a plurality of sampling areas 7 with each one of which a value is associated indicating the average value of the tone of grey detected in the area.

Subsequently, each image is subdivided into a plurality of comparison areas 8 having an extent that is the same as a multiple of the extent of one of the above sampling areas 7.

In this way, as shown in Figure 3, each comparison area 8 is superimposed on a plurality of sampling areas 7.

With each comparison area 8 a value is associated indicating the average of the values of the tones of grey detected in the sampling areas 7 that make it up.

The electronic control unit of the apparatus 1 operates according to a method that envisages two distinct phases.

A first phase provides for a learning process during which data are acquired from a plurality of images of hydraulic manifolds 3 that have been deemed to be acceptable.

A second phase provides for an examination procedure during which the images of hydraulic manifolds 3 to be examined are compared with the reference obtained by processing said data. During the learning phase, each image is subdivided into a plurality of comparison areas 8, as disclosed above.

For each image a matrix is defined the values of which are representative of the average values of the tones of grey detected in two adjacent comparison areas 8.

The pairs of comparison areas 8 are identified by scanning the image in a preset direction X of the image.

Subsequently, by scanning the image in a further direction Y, substantially perpendicular to the direction X, another matrix is obtained the elements of which are obtained in a similar manner to the elements of the above matrix.

A further matrix is furthermore obtained, the elements of which are indicative of the difference of the values of the tones of grey of two adjacent comparison areas 8, such differences being measured in the direction X.

In the same way, a yet further matrix is obtained the elements of which are indicative of the difference of the values of the tones of grey of two adjacent comparison areas 8, such differences being measured in the direction Y, substantially orthogonal to the direction X.

The further matrix and the yet further matrix are therefore indicative of the variations of the values of the tone of grey, they thus constitute an indication of the value of the contrast of the image detected for each pair of adjacent comparison areas and in mutually perpendicular directions. During the implementation of the above-mentioned learning process, a preset number of products deemed to be acceptable is identified.

For each of the above products a matrix, another matrix, a further matrix and a yet further matrix are obtained, as disclosed above.

In other words, a number of groups of four matrices are obtained that is the same as the number of images associated with the products deemed to be acceptable.

Subsequently, a first matrix 1 is generated the elements of which consist of the average of the values of the corresponding elements of the further matrices associated with each of the images deemed to be acceptable.

In other words, each element of the first matrix is indicative of the contrast average calculated for a certain pair of adjacent comparison areas, in the direction X.

This average is calculated on the values extrapolated from all the sample images.

In the same way, a further first matrix is obtained the elements of which are constituted by the average of the values of the corresponding elements of the yet further matrices associated with each of the images deemed to be acceptable.

In other words, each element of the further first matrix is indicative of the average of the contrast calculated for a certain pair of adjacent comparison areas, in the direction Y. This average is calculated on the values extrapolated from all the sample images.

A second matrix is then calculated, the elements of which are indicative of the standard deviation of the values of the contract measured in the direction X.

Each of the above elements is calculated from the further matrices associated with the images of the products deemed acceptable.

In the same way, a further second matrix is calculated, the elements of which are indicative of the standard deviation of the values of the contrast measured in the direction Y.

Each of the aforementioned elements is calculated from the yet further matrices associated with the images of the products deemed acceptable.

Furthermore, a third matrix is obtained, the elements of which are indicative of the average of the values of the contrast, measured in the direction X, referring to a preset tone of grey, regardless of the position of the pairs of comparison areas in which these values of the contrast were detected. Similarly, a further third matrix is obtained that is similar to the above third matrix and is relative to the direction Y. The third matrix and the further third matrix are therefore single-dimensional matrices, each one of which comprising 256 elements, each one of which is associated with one of the tones of grey.

Each element is constituted by the average of the values of the contrast - detected by scanning the image in the direction X, or in the direction Y - associated with a particular tone of grey, these values being extrapolated from all the sample images.

A fourth matrix is furthermore obtained, the elements of which are indicative of the standard deviation of the values of the contrast measured in the direction X and associated with a preset tone of grey, regardless of the position of the pairs of comparison areas in which the standard deviation values of the contrast have been calculated.

Similarly, a further fourth matrix is obtained that is similar to the above third matrix and relative to the direction Y.

The fourth matrix and the further fourth matrix are therefore single-dimensional matrices, each one of which comprising 256 elements, each one of which is associated with one of the tones of grey.

Each element is constituted by the standard deviation of the values of the contrast - detected by scanning the image in the direction X, or in the direction Y - associated with a particular tone of grey, these values being extrapolated from all the sample images.

Subsequently, by processing the aforementioned fourth matrix and the aforementioned further fourth matrix, a fifth matrix and a further fifth matrix are calculated, each element of which consists of a moving average, calculated on a preset number of values, of the standard deviation of the values of the contrast in relation to the tone of grey as the tone of grey varies.

Also the fifth matrix and the further fifth matrix are therefore single-dimensional matrices comprising 256 elements calculated by carrying out a moving average of the elements of the fourth matrix and of the further fourth matrix respectively.

All the matrices disclosed above are obtained by scanning the images of the products deemed to be acceptable, by examining in succession pairs of comparison areas and calculating average values of the tone of grey, the values of the contrast and the values of the standard deviations for each pair of adjacent comparison areas.

At the end of the examination of all the comparison areas of all the images of the products deemed to be acceptable, the learning process terminates.

The examination procedure comprises a first phase in which an image of a piece to be analysed is acquired.

Subsequently, the image is subdivided into sampling areas 7 and into comparison areas 8 and for this image there are obtained the indicative matrix of the average values of the tone of grey detected in the direction X, the other matrix indicative of the average values of the tone of grey detected in the direction Y, the further matrix indicative of the values of the contrast detected in the direction X and the yet further matrix indicative of the values of the contrast detected in direction Y, with the methods that were previously disclosed.

Subsequently, each element of the further matrix and of the yet further matrix associated with the piece to be examined is compared with the corresponding element of the first matrix or of the further first matrix.

The value of the aforementioned element is considered to be acceptable if it differs from the value of the aforementioned corresponding element by less than a preset amount.

On the other hand, if the value of the aforementioned element differs from the value of the aforementioned corresponding element by more than the preset amount, a counter of the differences detected between the image under examination and the reference defined by the plurality of the images of the products deemed to be acceptable is increased by one unit.

The aforementioned preset amount takes on a value defined by the sum of the two terms.

A first term is given by the value of the standard deviation of the contrast associated with the matrix element multiplied by three.

This first term can be extrapolated from the second matrix, or from the further second matrix.

The second term is given by the value of the moving average of the standard deviation of the contrast associated with the tone of grey detected for the pair of adjacent comparison areas.

The value of the second term can be extrapolated from the fifth matrix, or from the further fifth matrix and is chosen at the value of the grey tone associated with the pair of comparison areas.

This value of the tone of grey is detectable from the matrix, or from the other matrix, associated with the image under examination.

It is possible to provide a corrective factor that enables the weight to be modified that the aforementioned second term has in relation to the overall entity of the above preset quantity.

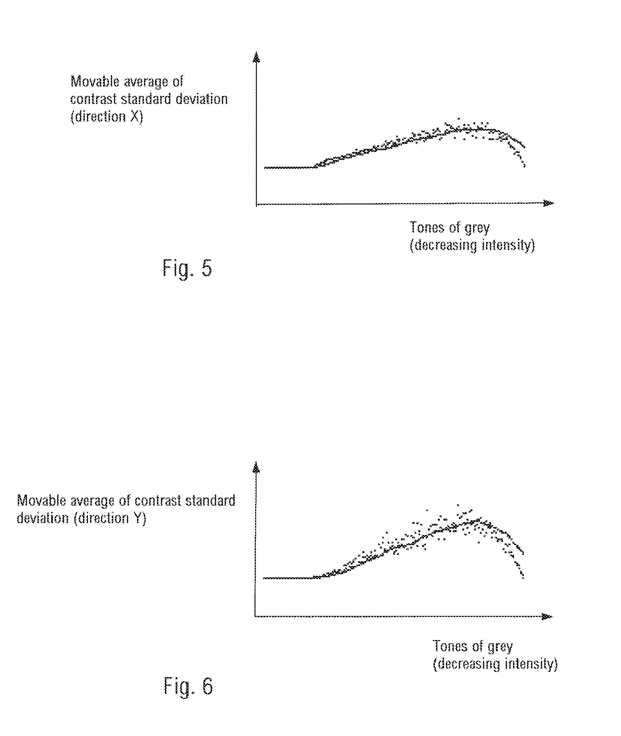

The moving average of the contrast according to the tone of grey has a trend of the type shown in Figures 5 and 6.

The second term, proportionate to the aforementioned moving average, enables a lower tolerance threshold to be obtained - therefore high sensitivity - in the zones of the image that are darker, in which the values of the contrast are low due to lack of light, and a higher tolerance threshold to be obtained in the zones in which the image is lighter and has reflections that are very suddenly variable.

In particular, the second term enables the zones to be compensated that are overexposed or underexposed in the image under examination, regardless of whether such zones appeared or not in the sample images.

The examination procedure makes a comparison for each pair of comparison areas, or for each element of the further matrix and of the yet further matrix associated with the piece under examination.

If, at the end of the procedure of examination, the value of the parameter indicating the differences is below a preset threshold, the image under examination, in its entirety, is considered satisfactory.

If, on the other hand, at the end of the procedure under examination the counter value of the differences exceeds the aforementioned threshold, the image under examination is deemed to be unacceptable.

If the image under examination is deemed to be acceptable, a further comparison is made.

Each element of the further matrix and of the yet further matrix associated with the image to be examined is compared with the corresponding element of the first matrix or of the further first matrix.

The value of the aforementioned element is considered to be acceptable if it differs from the value of the corresponding element by less than the value of the standard deviation of the contrast associated with the matrix element multiplied by three.

In practice, the test that was already conducted previously using a lower limit value is repeated, the limit value not comprising the aforementioned second term, namely the value of the moving average of the standard deviation of the contrast in relation to the particular value of the tone of grey.

If also the aforementioned further comparison gives a positive result, the values of the first matrix, of the further first matrix, of the second matrix and of the further second matrix are used to again calculate the values of the reference matrices with which the images to be subsequently examined will be compared.

In this way a self-learning process is implemented.

In other words, the first matrix elements, the further first matrix elements, the second matrix elements and the further second matrix elements defined in the course of the learning process do not remain unchanged, but are recalculated each time that an image is identified that is deemed to be particularly good, i.e. considered to be acceptable following a further comparison.

The first matrix elements and the further first matrix elements are calculated by calculating a new average that takes account of the value of the element identified in the course of the last running of the examination procedure.

This calculation is based on the following formula:

$$\text{Average }_{N+1} = (N * \text{Average }_N + \text{value }_{N+1})/(N+1)$$

The second matrix elements and the further second matrix elements are calculated on the basis of the following formula (the word "Sigma" indicating standard deviation of the contrast):

$$Sigma_{N+1} = \sqrt{(N * Sigma_N{}^2 + (value_{N+1} - Average_{N+1})^2)/(N+1)}$$

The formula disclosed above enables an approximate value of the standard deviation to be calculated.

This approximation combines a satisfactory degree of precision with a significant simplification of calculation and a reduction in the burden on the memory of the control unit.

It should be noted that the above formula is used both in the learning process and in the self-learning process.

In this way, by acquiring the N+1st image, standard deviation can be recalculated simply from the one already stored in memory, using the value detected and the average that has just been calculated.

Owing to this approximation, in addition to drastically reducing calculation time, the space occupied in the memory is always the same, regardless of the number of images examined. The data in the memory will be exclusively the average and the deviation after the last image examined.

During the learning phase, the value of N is increased by one for each piece examined.

During the self-learning phase, on the other hand, N remains constant and simply determines the weighting with which the self-learnt values modify the values of the averages and of the standard deviations.

Tests run on an electronic sheet with values similar to those at issue in the analysis of the images have shown that this method of calculation approximates to a satisfactory extent the behaviour of a moving average.

The method according to the invention enables a reference to be obtained that changes over time according to the values of the contrast and the standard deviation of the contrast detected for pieces deemed to be particularly good.

The tolerance thresholds therefore vary taking account of the evolution of the data on the images examined up until that moment.

The principle that governs the self-learning process is such that the method, as the controlled images increase (and are therefore self-learnt), assigns a progressively decreasing importance to the first images learnt, or to the sample images.

The contribution made by an image to the average of the contrast and to the standard deviation of the contrast has an incidence that is greater the more recently the image has been examined - and been deemed to be acceptable -.

By setting the value of N it is possible to define the weight of the last self-learnt image.

The self-learning process enables the method to compensate for slow variations that are detected in the images and are due to positioning variations of the robot 5 and of the endoscopic probes 4, namely variations to the lighting conditions due to the external light, or, lastly, to any progressive dirtying of the endoscopic probes 4.

According to a variation, the method provides, during the learning phase, for generating a sixth matrix whose elements consist of the average of the values of the corresponding elements of said matrices of the mid-grey tones calculated for a further comparison area.

In one version, the further comparison area may coincide with one of the comparison areas 8.

In another version, the further comparison area may comprise a pair of adjacent comparison areas 8, identified with the previously described methods.

In a further version, the further comparison area may comprise a multiple of the comparison areas 8 described above.

From tests conducted, it has been detected that particularly satisfactory results are obtained by selecting an extent of the further comparison area that is noticeably greater than the extent of the comparison areas 8.

From the foregoing disclosure, it is obvious that each element of the sixth matrix is indicative of the average of the tone of grey calculated in the further comparison area.

This average is calculated on the values extrapolated from all the sample images.

Subsequently, a seventh matrix is calculated, the elements of which are indicative of the standard deviation of the values of the tone of grey, for each further comparison area.

In this case, during the procedure of checking the value of the tone of grey associated with each of the further comparison areas identified on the image to be examined, it is compared with the corresponding value of the average of the tone of grey extrapolated from the sixth matrix.

If the value of the tone of grey extrapolated from the image under examination differs from the value of the average of the tone of grey by more than the corresponding standard deviation of the tone of grey, detected by the corresponding element of the seventh matrix multiplied by a preset coefficient, the counter of the differences between the image under examination and the reference that was previously disclosed is increased by a unit.

In a version, this coefficient is the same as three.

At the end of the examination of an image, if the value of the counter of the differences is less than a preset threshold, the values of the tone of grey and of the standard deviation of the tone of grey of all further comparison areas are self-learned, with similar methods to those disclosed above with reference to the standard deviation of the contrast.

In other words, the sixth matrix and the seventh matrix are recalculated to take account of the data extrapolated from the image deemed to be acceptable.

Providing a check of the contrast for each pair of comparison areas, and a further check of the tone of grey for each further comparison area, enables a more thorough examination of the images to be conducted.

If a check of the contrast and the tone of grey is conducted the threshold value of the counter of the differences must be suitably raised compared with the case disclosed previously in which the check is conducted only on the contrast.

**Claims**

1. Method for checking images of products in order to identify faults in the products, the method comprising:

   - acquiring an image,
   - comparing said image with reference means,
   - modifying said reference means on the basis of said image, if said comparing has shown that said image conforms to said reference means,
   - calculating a significant parameter of a feature of said image in a comparison zone (8) identified in said image,
   - calculating further significant parameters of said feature in further comparison zones (8) of reference images, the position of each of said further comparison zones (8) in said reference images corresponding to the position of said comparison zone (8) in said image,
   - calculating the average of the values of said further parameters,

   wherein said comparing comprises ascertaining whether the value of said parameter differs from the value of said average by more than a preset amount, and
   wherein said preset amount is proportionate to a moving average of the standard deviation values of the contrast, calculated for all the further comparison zones (8) identified in said reference images, said standard deviation values of the contrast being associated with the value of the tone of grey measured in said image at said comparison zone (8).

2. Method according to claim 1, wherein said modifying comprises recalculating said average using the value of said parameter.

3. Method according to claim 1 or 2, wherein said processing comprises calculating the standard deviation of the values of said further parameters; said modifying optionally comprising recalculating said standard deviation using the value of said parameter; said standard deviation optionally being calculated in an approximate manner using the formula

$$Sigma_{N+1} = \sqrt{(N * Sigma_N^2 + (value_{N+1} - Average_{N+1})^2)/(N+1)}$$

   wherein Sigma indicates the value of the standard deviation; said preset amount optionally being proportionate to said standard deviation; the method optionally comprising increasing by one unit the value of a counter of the differences detected between said image and said reference means if the value of said parameter differs from the value of said average by more than a preset amount.

4. Method according to any one of claims 1 to 3, wherein said comparing furthermore comprises comparing all the comparison zones (8) identified in said image with the corresponding further comparison zones (8) identified in said reference images.

5. Method according to claim 4, comprising increasing by one unit the value of a counter of the differences detected between said image and said reference means if the value of said parameter differs from the value of said average by more than a preset amount, wherein said comparing furthermore comprises, after said comparing, ascertaining whether the value of said counter of the differences is less than a preset limit.

6. Method according to any one of claims 1 to 5, wherein said parameter indicates the mid-grey tone detected in said comparison zone (8).

7. Method according to any one of claims 1 to 6, wherein said comparison zone comprises a first comparison zone and a second comparison zone arranged adjacent to each other; said parameter optionally indicating the difference between the tone of grey detected in said first comparison zone and the tone of grey detected in said second comparison zone (8), this difference being indicative of the contrast of said image at said comparison zone (8).

8. Method according to claim 5, or according to any one of claims 6 to 7 as appended to claim 5, and furthermore comprising, if the value of said counter of the differences is less than said preset limit, generating a signal indicating that said image is deemed to conform to said reference means.

9. Method according to claim 5, or according to any one of claims 6 to 7 as appended to claim 5, or according to claim 8, and furthermore comprising, if the value of said counter of the differences is greater than said preset limit, generating a signal indicating that said image is deemed not to conform to said reference means.

10. Method according to any one of claims 1 to 9, wherein said comparing is conducted on comparison zones (8) selected by scanning said image in a preset direction (X); said comparing optionally being conducted on comparison zones (8) selected by scanning said image by proceeding in a further preset direction (Y), transversal to said preset direction (X).

11. Method according to any one of claims 1 to 10, and furthermore comprising identifying in said image and in said reference images a plurality of sampling zones (7), said comparison zones (8) and said further comparison zones having an extent the same as a multiple of the extent of said sampling zones (7).

12. Method according to any one of claims 1 to 11, wherein said image comprises an image of a product obtained by casting, for example made of cast iron.

13. Program that comprises a code for implementing the method according to claims 1 to 12 when the programme is run in a computer system.

14. Support that is readable by a computer and carries a program according to claim 13.

15. Computer system in which a programme is loaded or stored according to claim 13.

Fig. 1

Fig. 2

Fig. 3

Fig. 4

EP 2 259 219 A2

Movable average of
contrast standard deviation
(direction X)

Tones of grey
(decreasing intensity)

Fig. 5

Movable average of contrast standard
deviation (direction Y)

Tones of grey
(decreasing intensity)

Fig. 6